(19) Europäisches Patentamt
European Patent Office
Office européen des brevets

(11) EP 4 535 458 A1

(12) **EUROPEAN PATENT APPLICATION**
published in accordance with Art. 153(4) EPC

(43) Date of publication:
09.04.2025 Bulletin 2025/15

(21) Application number: 24771144.3

(22) Date of filing: 11.03.2024

(51) International Patent Classification (IPC):
$H01M\ 4/1393^{(2010.01)}$ $H01M\ 4/04^{(2006.01)}$
$H01M\ 4/133^{(2010.01)}$ $H01M\ 4/587^{(2010.01)}$
$H01M\ 4/38^{(2006.01)}$ $H01M\ 4/48^{(2010.01)}$
$H01M\ 10/052^{(2010.01)}$ $H01M\ 4/02^{(2006.01)}$

(52) Cooperative Patent Classification (CPC):
H01M 4/02; H01M 4/04; H01M 4/133;
H01M 4/1393; H01M 4/38; H01M 4/48;
H01M 4/587; H01M 10/052; Y02E 60/10

(86) International application number:
PCT/KR2024/003084

(87) International publication number:
WO 2024/191145 (19.09.2024 Gazette 2024/38)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 13.03.2023 KR 20230032292

(71) Applicant: LG Energy Solution, Ltd.
Seoul 07335 (KR)

(72) Inventors:
• YOON, Jong Su
Daejeon 34122 (KR)

• LEE, Taek Soo
Daejeon 34122 (KR)
• CHO, Jin Ho
Daejeon 34122 (KR)
• JEON, Shin Wook
Daejeon 34122 (KR)
• KIM, Young Gon
Daejeon 34122 (KR)

(74) Representative: Plasseraud IP
104 Rue de Richelieu
CS92104
75080 Paris Cedex 02 (FR)

(54) **NEGATIVE ELECTRODE FOR LITHIUM SECONDARY BATTERY AND METHOD OF MANUFACTURING SAME**

(57) A manufacturing method of a negative electrode, in which a negative electrode slurry having a magnetic field applied is dried and then rolled, but by controlling the rolling load according to Formula 1, which depends on the intensity of the magnetic field applied to the negative electrode slurry. The manufactured negative electrode exhibits high energy density while maintaining the objective thickness and has low rolling stress and good structural stability. The manufactured negative electrode exhibits low volume change of the negative electrode active layer when charging and discharging.

[FIG. 2]

$y = -0.0001x + 5.5426$

EP 4 535 458 A1

## Description

[Technical Field]

The present application claims the benefit of priority based on Korean Patent Application No. 10-2023-0032292, filed on March 13, 2023, all of which are incorporated herein by reference.

The present disclosure relates to a negative electrode for a lithium secondary battery and a manufacturing method thereof.

[Background Art]

Recently, secondary batteries have been widely applied not only in small devices such as portable electronics, but also in medium and large devices such as battery packs or power storage devices in hybrid or electric vehicles.

Among them, a lithium secondary battery is manufactured by using a metal oxide such as $LiCoO_2$, etc. as a positive electrode active material and a carbon material as a negative electrode active material, a polyolefin-based porous separator between the negative electrode and the positive electrode, and a non-aqueous electrolyte containing a lithium salt such as $LiPF_6$, etc. During charging, lithium ions of the positive electrode active material are released and inserted into the carbon layer of the negative electrode, and conversely, during discharging, lithium ions of the negative electrode carbon layer are released and inserted into the positive electrode active material. In this case, the non-aqueous electrolyte permeated in a positive electrode and negative electrode plays the role of a medium to move lithium ions between the negative electrode and positive electrode.

In order to realize high capacity and high energy density of such a lithium secondary battery, it is necessary to increase the loading amount of each electrode, meanwhile, to increase the rolling density during electrode manufacturing.

Specifically, the electrodes of the lithium secondary battery may be obtained as electrode sheets, wherein the electrode sheets may be dried by applying an electrode slurry including an electrode active material to the electrode current collector at a high loading amount during manufacture, and the dried electrode slurry may be rolled and molded by a rolling device to form a high loading and high density electrode active layer on the electrode current collector. Here, when manufacturing the rolled sheet, the rolling is performed in consideration of the density distribution, thickness, thickness distribution, precision, and the like of the desired electrode active layer.

However, the rolled sheet tends to return to the original state due to the stress accumulated in the powder of the electrode active material contained in the electrode active layer as the electrode active layer is pressurized during rolling, in other words, the spring-back phenomenon is severely occurring. Therefore, as time passes, the thickness of the electrode active layer including the electrode active material becomes thicker than the desired thickness. This causes a problem of reducing the energy density of the electrode having a high loading amount.

In order to improve the above spring-back phenomenon, a technology has been developed in which rolling of the dried electrode slurry is performed several times or by utilizing a multi-stage rolling device. However, the technology not only fails to completely suppress the spring-back phenomenon, but also has the limitation of low economic feasibility in terms of energy or process efficiency.

Accordingly, there is a substantial need for a manufacturing technology of electrodes that can solve the above problems and maintain the desired objective thickness despite the passing of time after rolling.

[Disclosure]

[Technical Problem]

An object of the present disclosure is to provide a negative electrode for lithium secondary battery and a manufacturing method thereof, in which the spring-back phenomenon of an active layer, especially an active layer having a high loading amount, is suppressed, thereby the desired objective thickness can be maintained despite the passing of a predetermined time when rolling.

[Technical Solution]

To solve the problems described above,

The present disclosure provides, in one aspect, a manufacturing method of a negative electrode for lithium secondary battery, comprising:

applying magnetic field to a negative electrode slurry applied on a negative electrode current collector;
drying the negative electrode slurry to which the magnetic field was applied to form a negative electrode active layer;

and
rolling the formed negative electrode active layer,
wherein the negative electrode slurry includes a carbon-based negative electrode active material,
wherein the magnetic field is applied with an intensity of from 3,000 G to 15,000 G,
wherein a rolling load in the rolling is controlled according to the following Formula 1:

[Formula 1]

$$y = Ax + B$$

wherein Formula 1,

y represents the rolling load (unit: ton),
x indicates the magnetic field intensity (unit: Gauss) when the magnetic field is applied,
A and B are $-0.01 \leq A < 0$ and $3 \leq B \leq 7$.

In this case, the rolling load may be from 1 ton to 7 tons.

In addition, the rolling may include: a first rolling in which the formed negative electrode active layer is pressurized with the rolling load of [Formula 1]; and a second rolling in which the first rolled negative electrode active layer is further pressurized, wherein the rolling load at the first rolling may be greater than the rolling load at the second rolling.

Specifically, the rolling load at the second rolling may have a ratio of 50% or less of the rolling load at the first rolling.

Further, the rolling may be performed at a temperature of 20°C to 35°C.

As such, the negative electrode active layer may have an average thickness increase rate of less than 10% after 72 hours of rolling at room temperature ($22 \pm 1$°C) based on the average thickness immediately after rolling.

Moreover, the applying magnetic field may be performed for 5 seconds to 60 seconds.

Further, the present disclosure comprises, in one aspect,

a negative electrode current collector, and a negative electrode active layer provided on at least one surface of the negative electrode current collector and comprising a carbon-based negative electrode active material,
providing a negative electrode for a lithium secondary battery manufactured by a manufacturing method according to the present disclosure as described above.

In this case, the negative electrode active layer may have a degree of alignment (O.I) of the carbon-based negative electrode active material represented by Formula 2, which may be from 0.2 to 1.5:

[Formula 2]

$$O.I = I_{004}/I_{110}$$

wherein Formula 2,

$I_{004}$ indicates the area of the peak representing the (0,0,4) crystal surface in X-ray diffraction spectroscopy measurements of the negative electrode active layer, and
$I_{110}$ indicates the area of the peak representing the (1,1,0) crystal surface in an X-ray diffraction spectroscopy measurement of the negative electrode active layer.

Also, the negative electrode active layer may have a density of 1.2 $g/cm^3$ to 1.8 $g/cm^3$, and may have an average thickness of 100$\mu$m to 300$\mu$m.

Further, the negative electrode active layer may have a spring-back rate of less than 10%.

Meanwhile, the carbon-based negative electrode active material included in the negative electrode active layer may include at least one of natural graphite and artificial graphite.

In addition, the negative electrode active layer may, in some cases, further comprise a silicon-based negative electrode active material, and the silicon-based negative electrode active material may comprise at least one of Si, SiC, and $SiO_x$ (wherein $0.8 \leq x \leq 2.5$).

[Advantageous Effects]

A manufacturing method of a negative electrode for a lithium secondary battery according to the present disclosure is to dry a negative electrode slurry with a magnetic field applied and then roll it, but by controlling the rolling load according to Formula 1, which depends on the intensity of the magnetic field applied to the negative electrode slurry, the method is simple and effective in improving the spring-back phenomenon of the negative electrode active layer even with a small number of processes.

In addition, the manufactured negative electrode not only exhibits a high energy density while maintaining the objective thickness even when the loading amount of the negative active layer is large, but also has the advantage that the rolling stress is low and the structural stability of the negative electrode active layer is improved, so that the volume change of the negative electrode active layer according to charging and discharging is suppressed, thereby improving the lifespan of a battery.

**[Brief Description of the Drawings]**

FIG. 1 is an image illustrating the crystalline phase of graphite, a carbon-based negative electrode active material, and an axial view showing the largest expansion of graphite crystals because of spring-back phenomenon during rolling.

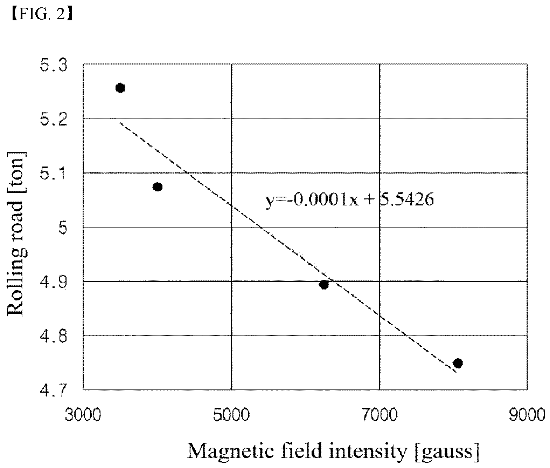

FIG. 2 is a graph illustrating the rolling load applied according to the magnetic field intensity during the manufacturing of a negative electrode in accordance with Formula 1 of an aspect according to the present disclosure.

[Detailed Description]

The present disclosure may have various modifications and various aspects, and thus specific aspects thereof will be described in detail below.

However, it should be understood that the present disclosure is not limited to the specific aspects, and includes all modifications, equivalents, or alternatives within the spirit and technical scope of the present disclosure.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present disclosure, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

In addition, in the present disclosure, "including as a major component" can mean including at least 50 wt% (or at least 50 vol.%), at least 60 wt% (or at least 60 vol.%), at least 70 wt% (or at least 70 vol.%), at least 80 wt% (or at least 80 vol.%), at least 90 wt% (or at least 90 vol.%), or at least 95 wt% (or at least 95 vol.%) of a defined component relative to the total weight (or total volume) of the negative electrode active material. For example, "comprising graphite as a primary component as a negative electrode active material" may mean including at least 50 wt%, at least 60 wt%, at least 70 wt%, at least 80 wt%, at least 90 wt%, or at least 95 wt% of graphite, based on the total weight of the negative electrode active material, and in some cases may mean that the entire negative electrode active material is graphite, comprising at least 100 wt% of graphite.

In addition, as used herein, "electrode sheet" may refer to an object having a negative electrode slurry applied to the negative electrode current collector, or to an object having a negative electrode slurry applied to the negative electrode current collector that has dried to form a negative active layer.

Further, as used herein, "carbon-based negative electrode active material is oriented" or "carbon-based negative electrode active material is aligned" means that the crystal surfaces of the carbon-based negative electrode active material comprising the negative electrode active material particles are distributed in a predetermined orientation with respect to the surface of the negative electrode current collector. In this case, the crystal surface is a crystal surface representing the planar structure of the carbon-based negative electrode active material, which may mean a (1,0,0) crystal surface or a (1,1,0) crystal surface. Further, "orienting the carbon-based negative electrode active material" may be different from the carbon-based negative electrode active material particles themselves being arranged to have a specific orientation within the negative electrode active layer.

Further, "high orientation (or degree of orientation) of the carbon-based negative electrode active material" may mean that the carbon-based negative electrode active material contained in the negative electrode active layer is aligned at a high frequency relative to the surface of the negative electrode current collector, and in some cases, the carbon-based negative electrode active material contained in the negative electrode active layer is aligned at a high angle (e.g., greater than 45°; more specifically, 60° or more) relative to the surface of the negative electrode current collector.

Further, "high degree of alignment of the carbon-based negative electrode active material" may mean that the "O.I" referred to herein has a large value, such that the carbon-based negative electrode active material contained in the negative electrode active layer is aligned at a low angle (e.g., less than 45°) relative to the surface of the negative electrode current collector. Conversely, "low degree of alignment of the carbon-based negative electrode active material" may mean that the "O.I" has a small value, indicating that the carbon-based negative electrode active material contained in the negative electrode active layer is aligned at a high angle (e.g., greater than 45°; more specifically, greater than 60° or more) based on the surface of the negative electrode current collector.

Further, as used herein, the term "crystal surface of the carbon-based negative electrode active material" may refer to a surface on which the atoms of the carbon-based negative electrode active material form the shape of a crystal, which in the present disclosure may mean a crystal surface comprising a plane of the carbon-based negative electrode active material, or a crystal surface comprising the a-axis/a-b-axis of the carbon-based negative electrode active material crystal.

Hereinafter, the present disclosure will be described in more detail.

**Manufacturing method of negative electrode for lithium secondary battery**

The present disclosure provides, in one aspect, a manufacturing method of a negative electrode for lithium secondary battery, comprising:

applying magnetic field to a negative electrode slurry applied on a negative electrode current collector S1;
drying the negative electrode slurry to which the magnetic field was applied to form a negative electrode active layer S2; and
rolling the formed negative electrode active layer S3.

A manufacturing method of a negative electrode according to the present disclosure includes applying a negative electrode slurry including a carbon-based negative electrode active material on a negative electrode current collector, and applying a magnetic field to the surface of the applied negative electrode slurry S1 to align the carbon-based negative electrode active material in the negative electrode slurry to have a predetermined angle with respect to the surface of the negative electrode current collector. Subsequently, the negative electrode slurry may be dried to form a negative electrode active layer including the highly oriented carbon-based negative electrode active material S2, and the negative electrode may be manufactured by rolling the continuously formed negative electrode active layer S3.

In this case, the present disclosure can effectively improve the spring-back phenomenon of the negative electrode active layer after rolling by controlling the rolling load of the negative electrode active layer according to the intensity of the magnetic field applying to the negative electrode slurry.

Generally, the negative electrode of a lithium secondary battery is manufactured by rolling a negative electrode sheet on which a negative electrode active layer is disposed with a rolling device to increase the energy density. However, the rolled sheet has a problem that the thickness of the negative electrode active layer becomes thicker than the intended thickness as time passes because the negative electrode active material tries to return to its original state due to the stress accumulated in the negative electrode active material powder as rolling is performed (in other words, the spring-back phenomenon). Such phenomenon is strongly manifested as the loading amount, which represents the weight of negative electrode active material per unit surface area or unit volume of the negative electrode active layer, increases.

In order to improve such problems, it has been necessary to perform several rolling processes or to perform a complex rolling process such as a multi-stage rolling process. However, even if a plurality of rolling processes or a complex rolling process such as a multi-stage rolling process is performed, the effect of improving spring-back is significantly reduced after a predetermined period of time passes, and there is a limitation that the effect of improving spring-back is insignificant as the loading amount of negative electrode active material increases.

In contrast, the method for manufacturing a negative electrode according to the present disclosure can exhibit a high spring-back improvement effect despite performing the rolling process no more than twice; more specifically, only once, by controlling the rolling load according to the following Formula 1, which depends on the intensity of the magnetic field applied to the negative electrode slurry:

[Formula 1]

$$y = Ax+B$$

wherein y represents the rolling load (unit: ton),
wherein x indicates the magnetic field intensity (unit: Gauss) when the magnetic field is applied,
wherein A and B satisfy $-0.01 \leq A < 0$ and $3 \leq B \leq 7$.

Hereinafter, a method for manufacturing a negative electrode according to the present disclosure will be described in more detail in each step.

First, a method of manufacturing a negative electrode according to the present disclosure includes a step (S1) of applying magnetic field to a negative electrode slurry applied on a negative electrode current collector. This step (S1) refers to orienting the crystal surface of the carbon-based negative electrode active material contained in the negative electrode slurry to have a predetermined angle with respect to the negative electrode current collector to suppress the spring-back phenomenon of the carbon-based negative electrode active material after rolling.

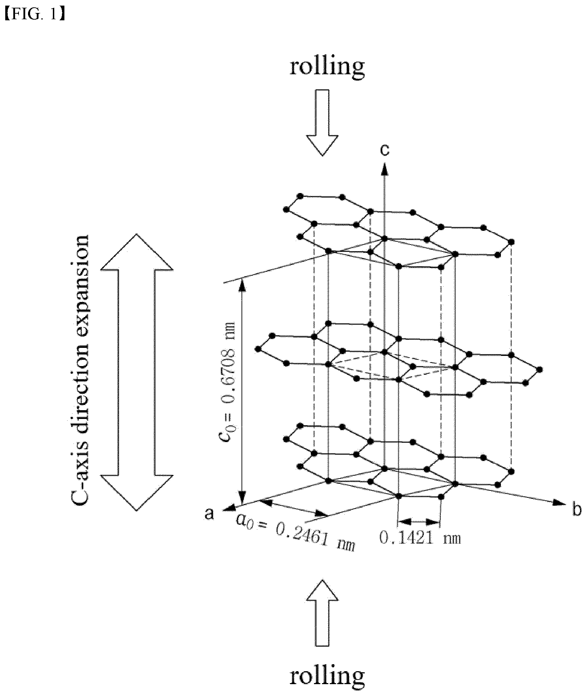

For example, in the case of graphite among the carbon-based negative electrode active materials, it has a crystalline phase in which two-dimensional planes are stacked as shown in FIG. 1. In the three-dimensional space in which the crystalline phase of graphite exists, the directions in which the planes of the graphite are located become the a-axis and b-axis, and the direction in which the planes are stacked becomes the c-axis direction. When pressure is applied to such graphite, it returns to its original state by the stress accumulated in the crystalline phase, and among them, the expansion due to recovery is the largest when pressure is applied in the c-axis direction of the crystalline phase.

The present disclosure overcomes this by aligning the crystal surface in the c-axis direction of the carbon-based negative electrode active material contained in the negative electrode slurry before drying of the negative electrode slurry so that the crystal surface is horizontal to the negative electrode current collector, in other words, the plane of the carbon-based negative electrode active material is perpendicular to the negative electrode current collector, in order to suppress the spring-back phenomenon of the carbon-based negative electrode active material after rolling of the negative electrode active layer.

Here, the orientation of the carbon-based negative electrode active material may be performed by applying a magnetic field to the negative electrode slurry applied to the negative electrode current collector pre-drying, in other words, the step of applying the magnetic field may be applied by magnetic parts disposed in the upper portion and the lower portion of the negative electrode current collector, which is moved by the application of the negative electrode slurry to the surface.

In addition, since the degree of orientation of the carbon-based negative electrode active material may be controlled by the intensity of the magnetic field applied to the negative electrode slurry or the time of exposure to the magnetic field, the applying magnetic field may be performed under a predetermined magnetic field intensity and time condition.

Specifically, the applying magnetic field may be applied with a magnetic field of 3,000 G (Gauss) to 15,000 G, more specifically, 3,000 G to 12,000 G; 3,000 G to 11,000 G; 3,000 G to 10,000 G; 3,000 G to 9,000 G; 3,000 G to 8,000 G; 3,000 G to 7,500 G; 3,000G to 6,000G; 5,000G to 9,000G; 10,000G to 15,000G; 8,000G to 12,000G; 3,000G to 12,000G; 4,000G to 8,000G; 5,000G to 8,500G; 3,000 G to 5,500 G; 3,500 G to 5,500 G; 4,000 G to 5,500 G; 3,500 G to 4,500 G; or 4,500 G to 5,000 G.

Further, the applying magnetic field may be performed for a period of 5 seconds to 60 seconds, and more particularly, may be performed for a period of 5 seconds to 30 seconds; 10 seconds to 60 seconds; 10 seconds to 30 seconds; 30 seconds to 60 seconds; 40 seconds to 50 seconds; 15 seconds to 35 seconds; 10 seconds to 50 seconds; or 20 seconds to 40 seconds.

The present disclosure can easily orient the crystal surface of the carbon-based negative electrode active material contained in the negative electrode slurry to a high angle close to vertical with respect to the surface of the negative electrode current collector by applying a magnetic field for the magnitude and duration of the magnetic field described above.

Further, the manufacturing method of the negative electrode according to the present disclosure includes drying the negative electrode slurry in which the carbon-based negative electrode active material is oriented by applying a magnetic field to form a negative electrode active layer S2.

Here, the drying of said negative electrode slurry may be applied in any manner capable of maintaining the orientation of the carbon-based negative electrode active material contained in the negative electrode active layer, without particular limitation. For example, the drying may be performed by applying heat energy to the negative electrode slurry using a hot air dryer, a vacuum oven, or the like.

Further, the method of manufacturing a negative electrode according to the present disclosure includes manufacturing a negative electrode by rolling the formed negative electrode active layer S3. This step (S3) may be performed by a method conventionally applied in the art, such as a roll press, to increase the density of the negative electrode active layer.

In this case, the load applied to the negative electrode active layer during the rolling is controlled according to Formula 1 below, which depends on the intensity of the magnetic field applied to the negative electrode slurry:

[Formula 1]

$$y = Ax+B$$

wherein Formula 1,

> y represents the rolling load (unit: ton),
> x indicates the magnetic field intensity (unit: Gauss) when the magnetic field is applied,
> A and B satisfy $-0.01 \leq A < 0$ and $3 \leq B \leq 7$.

Formula 1 is a parameter indicating a correlation between the intensity of the magnetic field applied to the negative electrode slurry and the load applied to the negative electrode active layer during rolling. Wherein, A and B in the above Formula 1 are constants, wherein A may be at least -0.1 and less than zero (in other words, $-0.1 \leq A < 0$), more specifically, at least -0.01 and less than zero (i.e., $-0.01 \leq A < 0$); at least -0.001 but less than zero (i.e., $-0.001 \leq A < 0$); -0.001 to -0.000001 (i.e., $-0.001 \leq A \leq -0.000001$); or -0.0005 to -0.000001 (i.e., $-0.0005 \leq A \leq -0.000001$). Also, B may be from 3 to 7 (i.e., $3 \leq B \leq 7$), more specifically from 4 to 6 (i.e., $4 \leq B \leq 6$); from 4.1 to 4.9 (i.e., $4.1 \leq B \leq 4.9$); from 5.1 to 5.9 (i.e., $5.1 \leq B \leq 5.9$); or from 4.5 to 5.7 (i.e., $4.5 \leq B \leq 5.7$).

In Formula 1 above, "load" refers to the force applied to the surface of the negative electrode active layer itself, and since the negative electrode active layer is subjected to load as it is transferred during the rolling process, the "pressure applied during rolling" should reflect the length of the direction perpendicular to the direction in which the negative electrode active layer is transferred (in other words, the width direction length of the negative electrode active layer). For example, if a negative electrode slurry is applied to a current collector using a die-coater with a coating width of 26.2 cm, and the negative electrode active layer (length in the width direction: 26.2 cm) formed by drying the negative electrode slurry is to be rolled with a rolling load of 5 tons, the preload can be about 0.19 ton/cm.

According to the above Formula 1, the rolling load may be reduced as the intensity of the magnetic field applied to the negative electrode slurry increases. This means that the rolling load required to suppress the spring-back phenomenon of the negative electrode active layer is influenced by the degree of orientation of the carbon-based negative electrode active material, and the orientation of the carbon-based negative electrode active material is influenced by the intensity of the magnetic field applied to the negative electrode slurry. The present disclosure can exhibit a high spring-back improvement effect by controlling the rolling load of the negative electrode active layer according to the present disclosure, such that the rolling process is performed no more than twice; more specifically, only once.

The present disclosure also provides that it is not necessary to apply an excessively high load to the negative electrode active layer in order to improve the spring-back phenomenon when rolling with a load according to the above Formula 1, so that the rolling stress applied to the manufactured negative electrode can be significantly reduced, and the structural stability of the negative electrode active layer can be obtained. Further, the present disclosure may provide a possibility to develop and/or manufacture a negative electrode with a thinner thickness, as the rolling of the negative active layer is possible even at relatively low loads, which allows space to subsequently apply additional external forces (e.g., rolling loads, etc.) without excessive stress to the negative active layer. In addition, a negative electrode with a smaller thickness may be advantageous in terms of charge and discharge capacity, power and/or energy density, as many electrodes may be stacked within an electrode assembly under the same thickness conditions.

As one example, the negative electrode active layer of a negative electrode manufactured according to the present disclosure may have an average thickness increase rate of less than 4% after 2.5 hours of rolling at room temperature ($22 \pm 1°C$) based on the average thickness immediately after rolling, more specifically, it may be less than 3%; less than 2%; or less than 1.5%.

As another example, the negative electrode active layer of the negative electrode manufactured according to the present disclosure may have an average thickness increase rate of less than 10% after 72 hours of rolling at room temperature ($22 \pm 1°C$) based on the average thickness immediately after rolling, more specifically, it may be 9.5% or less; or 9% or less.

In the present disclosure, the rolling may be performed only once as described above, and in some cases, it may be performed twice. In this case, the rolling the negative electrode active layer may include a first rolling (S3-1) in which the dried negative electrode active layer is pressurized, and a second rolling (S3-2) in which the first rolled negative electrode active layer is further pressurized.

Specifically, the first rolling (S3-1) may be a rolling step in which the energy density of the dried negative electrode active layer is increased, such that the density of the negative electrode active layer is substantially increased. Accordingly, the first rolling (S3-1) may be performed with a load equivalent to that in the case of performing only one rolling, and the rolling load may be controlled according to Formula 1.

In addition, the second rolling (S3-2) may be a step of further pressurizing the first rolled negative electrode active layer to compensate for the spring-back phenomenon of the negative electrode active layer that has occurred slightly, while improving the surface characteristics of the negative electrode current collector and the negative electrode active layer. Accordingly, the second rolling (S3-2) may be smaller than the rolling load applied to the negative electrode active layer during the first rolling. Specifically, the rolling load at the second rolling may have a ratio of 50% or less of the rolling load at the first rolling, and more specifically, it may have a ratio of 45% or less; 40% or less; 35% or less; 20% or less; 20% to 45%; 25% to 45%; or 30% to 45% of the rolling load at the first rolling.

Furthermore, the rolling load of the negative electrode active layer may be from 1 ton to 7 tons, more specifically, from 1 ton to 3 tons; from 2 tons to 6 tons; from 3 tons to 7 tons; from 4 tons to 7 tons; or from 4.5 tons to 5.9 tons.

The load may be the load when performing a one-time rolling load on the negative electrode active layer, and in some cases, the load may be the load applied at the first rolling when performing two rolling loads. The present disclosure can increase the density of the negative electrode active layer by performing the rolling load in the range as described above, as well as preventing the crystal surface alignment of the carbon-based negative electrode active material from decreasing and thus preventing the spring-back phenomenon from not improving.

Furthermore, when the above rolling (S3) is performed, the temperature and the rolling speed may satisfy a predetermined range.

Specifically, the rolling (S3) may be performed at a temperature of less than 40°C when performed, and more specifically, it may be performed at a temperature of 20°C to 30°C; 20°C to 28°C; 25°C to 30°C; or 22°C to 24°C.

In addition, the rolling (S3) may be performed at a rolling speed of 2 m/s to 7 m/s, more specifically, 2 m/s to 6.5 m/s; 2 m/s to 6 m/s; 2 m/s to 5.5 m/s; 2 m/s to 5 m/s; 2 m/s to 4. 5 m/s; 2 m/s to 4 m/s; 2.5 m/s to 4 m/s; 2.5 m/s to 3.5 m/s; 3.5 m/s to 5 m/s; 5 m/s to 7 m/s; 5.5 m/s to 6.5 m/s or 6 m/s to 7 m/s.

The present disclosure can increase the energy density of the negative electrode while minimizing the change in the degree of alignment of the carbon-based negative electrode active material contained in the negative electrode active layer formed by rolling the dried negative electrode slurry under the above temperature and/or speed conditions.

Meanwhile, in the present disclosure, the negative electrode slurry may be applied on the negative electrode current collector by discharging and coating the negative electrode slurry containing the carbon-based negative electrode active material on the surface of the negative electrode current collector in motion. Here, the application method may be a die coating method.

The die coating method may be performed through a slot die having a shim for controlling a discharge condition of the negative electrode slurry. In this case, by controlling the shape or the like of the shim, the loading amount, the application thickness, or the like of the negative electrode slurry applied on the negative electrode current collector can be easily controlled.

The manufacturing method of a negative electrode for a lithium secondary battery according to the present disclosure has the configuration as described above, and thus has excellent processability and economic feasibility, since the spring-back phenomenon of the negative electrode active layer can be significantly improved with a simple and small number of processes, even without performing a complex rolling process such as a plurality of rolling or multi-stage rolling as in the conventional method.

**Negative electrode for lithium secondary battery**

The present disclosure also provides, in one aspect, a negative electrode for a lithium secondary battery manufactured by a method according to the present disclosure as described above, comprising:
a negative electrode current collector; a negative electrode active layer provided on at least one surface of the negative electrode current collector and comprising a carbon-based negative electrode active material.

The negative electrode for lithium secondary battery according to the present disclosure comprises a negative electrode active layer comprising a carbon-based negative electrode active material on at least one surface of the negative electrode current collector. The negative electrode active layer, which is a layer embodying the electrical activity of the negative electrode, is manufactured by applying a negative electrode slurry including a negative electrode active material embodying an electrochemical oxidation-reduction reaction during charging and discharging of the cell to at least one surface of the negative electrode current collector, followed by drying and rolling the negative electrode slurry.

Generally, the negative electrode of a lithium secondary battery is manufactured by rolling a negative electrode sheet having a negative electrode active layer disposed thereon with a rolling device in order to increase the energy density. However, the rolled sheet has a problem that the thickness of the negative electrode active layer becomes thicker than the intended thickness as time passes due to a phenomenon (in other words, a spring-back phenomenon) in which the negative electrode active material tends to return to its original state due to stresses accumulated in the negative electrode active material powder as rolling is performed. This phenomenon is stronger as the loading amount, which indicates the weight of the negative electrode active material per unit surface area or unit volume of the negative electrode active layer, increases. To improve this problem, it has been necessary to perform several rolling or to perform a complex rolling process such as a multi-stage rolling process.

However, the negative electrode according to the present disclosure is characterized in that the spring-back phenomenon of the negative electrode active layer after rolling of the negative electrode slurry formed after applying a magnetic field to the negative electrode slurry according to the manufacturing method of the present disclosure described above is significantly improved by controlling the rolling load according to Formula 1. Thus, the negative electrode has the advantage of having a high energy density of the negative active layer and high processability and economic feasibility in manufacturing. **In** addition, the negative electrode has the advantage of low rolling stress and high structural stability of the negative active layer, so that the volume change of the negative active layer according to charging and discharging is reduced, thereby improving the lifespan of the battery.

In the present disclosure, the negative electrode active layer includes a carbon-based negative electrode active material as the negative electrode active material to realize electrical activity through a reversible oxidation-reduction reaction during charging and discharging of the battery.

The carbon-based negative electrode active material means a material having carbon atoms as a main component, and such carbon-based negative electrode active material may include graphite. The graphite may comprise one or more of natural graphite and artificial graphite.

In one example, the carbon-based negative electrode active material may comprise a mixed graphite that is a blend of natural graphite and artificial graphite. In this case, the mixed graphite may be a mixture of natural graphite and artificial graphite in a weight ratio of 10 to 50:50 to 90, or 10 to 30:70 to 90. By adjusting the content ratio of natural graphite and artificial graphite as above, the mixed graphite can prevent the adhesion of the negative electrode current collector and the negative electrode active layer from decreasing due to the natural graphite of less than 10 parts by weight with respect to the overall weight, and can prevent the charge and discharge capacity of the negative electrode from decreasing due to the natural graphite of more than 50 parts by weight.

Meanwhile, conventional artificial graphite has an excellent effect on improving the lifespan characteristics of the battery, but because it has a low capacity compared to natural graphite, it is necessary to load a higher amount to manufacture a high-density electrode. However, since artificial graphite has low rolling property and strong spring-back phenomenon, it is difficult to manufacture a high-density electrode satisfying the desired thickness. However, the negative electrode of the present disclosure can be manufactured by the manufacturing method of the present disclosure to provide a high-density negative electrode active layer in which the spring-back phenomenon is suppressed even if a high content of artificial graphite is included in the carbon-based negative electrode active material.

Moreover, the carbon-based negative electrode active material is not particularly limited in shape, but preferably has the shape of a spherical graphite assembly formed by aggregation of a plurality of flake graphite. As the flake graphite, other than natural graphite, artificial graphite, mesophase calcined carbon (bulk mesophase) based on tar and pitch, coke (raw coke, green coke, pitch coke, needle coke, petroleum coke, etc.), etc., are graphitized. In particular, the above carbon-based negative electrode active material is preferably assembled using a plurality of highly crystalline natural graphite. In addition, one graphite assembly may be formed by assembling 2 to 100, preferably 3 to 20, pieces of graphite in the shape of a flake.

In addition, the above carbon-based negative electrode active material may exhibit an average particle diameter $(D_{50})$ of $0.5\mu m$ to $20\mu m$, and more specifically, may exhibit an average particle diameter $(D_{50})$ of $0.5\mu m$ to $15\mu m$; $0.5\mu m$ to $10\mu m$; $5\mu m$ to $20\mu m$; $10\mu m$ to $20\mu m$; $12\mu m$ to $18\mu m$; $2\mu m$ to $7\mu m$; $0.5\mu m$ to $5\mu m$; or $1\mu m$ to $3\mu m$.

The average particle diameter of the graphite may be advantageous to have a smaller particle diameter to maximize the degree of disorder in the direction of expansion for each of the particles to prevent the expansion of the particles by charging of the lithium ions. However, when the particle diameter of the graphite is less than 0.5,um, a large amount of binder may be required due to an increase in the number of particles per unit volume. On the other hand, when the maximum particle diameter exceeds $20\mu m$, the expansion becomes severe, and the binding property between the particles and the binding property of the particles with the current collector may decrease as the charge and discharge are repeated, and the cycling characteristics may be greatly reduced.

Further, the negative electrode active layer may have a predetermined range of loading amount indicating the weight of the carbon-based negative electrode active material per unit surface area/volume. As one example, the negative electrode active layer may have a loading amount of 250 mg/25cm$^2$ to 500 mg/25cm$^2$. Specifically, the negative electrode active layer may have a loading amount of 250 mg/25cm$^2$ to 450 mg/25cm$^2$; 250 mg/25cm$^2$ to 400 mg/25cm$^2$; 250 mg/25cm$^2$ to 350 mg/25cm$^2$; 250 mg/25cm$^2$ to 300 mg/25cm$^2$; 270 mg/25cm$^2$ to 380 mg/25cm$^2$; 300 mg/25cm$^2$ to 500 mg/25cm$^2$; 380 mg/25cm$^2$ to 450 mg/25cm$^2$; or 400 mg/25cm$^2$ to 500 mg/25cm$^2$. The present disclosure can realize high capacity and power output of the manufactured lithium secondary battery by adjusting the loading amount of the negative electrode active layer to the above-described range.

Further, the negative electrode active layer may include a carbon-based negative electrode active material in which the crystal surface is aligned at a high angle close to perpendicular to the negative electrode current collector due to the application of a magnetic field before drying of the negative electrode slurry. In the case of graphite among the carbon-based negative electrode active material, the spring-back phenomenon due to rolling may be significantly improved by aligning the crystal surfaces in the a- and b-axis directions in which the plane of the graphite is located in the three-dimensional space in which the crystalline phase of graphite exists to be close to perpendicular with respect to the negative electrode current collector, and the structural stability may be improved so that the volume change of the negative electrode active layer according to charging and discharging may be reduced.

In one example, the above negative electrode active layer may be oriented such that the crystal surface of the carbon-based negative electrode active material is oriented so that the degree of alignment (O.I) represented by the following Formula 2 satisfies a predetermined value:

$$[\text{Formula 2}]$$

$$O.I = I_{004}/I_{110}$$

wherein Formula 2,

$I_{004}$ indicates the area of the peak representing the (0,0,4) crystal surface in X-ray diffraction spectroscopy (XRD) measurements of the negative electrode active layer, and
$I_{110}$ indicates the area of the peak representing the (1,1,0) crystal surface in an X-ray diffraction spectroscopy (XRD) measurement of the negative electrode active layer.

The crystal surface orientation of the carbon-based negative electrode active material may be determined by crystal surface analysis of the carbon-based negative electrode active material, such as X-ray diffraction. The degree of alignment (O.I) of the carbon-based negative electrode active material shown in Formula 2 above may be an indicator of the direction in which the crystal structure of the carbon-based negative electrode active material is aligned, more specifically, the degree to which the crystal surface representing a plane of the carbon-based negative electrode active material is aligned with respect to the surface of the negative electrode current collector in an X-ray diffraction (XRD) measurement. For example, when the negative electrode active layer is a carbon-based negative electrode active material comprising graphite, X-ray diffraction measurements of the electrode sheet show that $2\theta=26.5\pm0.2°$, $42.4\pm0.2°$, $43.4\pm0.2°$, $44.6\pm0.2°$, $54.7\pm0.2°$, and $77.5\pm0.2°$, which represent the (0,0,2), (1,0,0), (1,0,1)R, (1,0,1)H, (0,0,4), and (1,1,0) surfaces of the crystal surface of graphite contained in the negative electrode active layer.

In general, in the case of graphite, graphene layers are placed on the a-axis and b-axis surfaces, and these graphene layers are stacked along the c-axis to have a hexagonal or rhombohedral crystal structure. Here, the crystal surface peak is a peak indicative of the surface characteristic of such a crystal structure. In addition, the peak occurring at $2\theta=43.4\pm0.2°$ may be observed as an overlap of the peaks corresponding to the (1,0,1)R surface of the carbon-based negative electrode active material and the (1,1,1) surface of the negative electrode current collector, such as copper (Cu), and thus may be excluded in determining the degree of alignment.

The present disclosure can measure the degree of alignment (O.I.) of a carbon-based negative electrode active material by the ratio of the area of the peak at $2\theta=54.7\pm0.2°$ indicating the (0,0,4) surface and the peak at $2\theta=77.5\pm0.2°$ indicating the (1,1,0) surface, specifically, the ratio of the areas obtained by integrating the intensities of the peaks. The (0,0,4) surface appearing at $2\theta=54.7\pm0.2°$ indicates the thickness direction characteristic of the layered structure in which the graphite layer planes are stacked, and the (1,1,0) surface appearing at $2\theta=77.5\pm0.2°$ indicates the planar characteristic of the stacked graphite layer. Thus, the smaller the peak of the (0,0,4) surface, which indicates the thickness direction characteristic of the graphite layer plane, and the larger the peak of the (1,1,0) surface, which indicates the planar characteristic of the graphite layer, the greater the alignment of the graphite plane with respect to the surface of the negative electrode current collector at a high angle. In other words, the degree of alignment (O.I) may mean that the angle or slope of the plane of the graphite layer with respect to the surface of the negative electrode current collector is close to 90° when the value is close to 0, and the angle or slope with respect to the surface of the negative electrode current collector is close to 0° or 180° when the value is larger.

For example, the negative electrode according to the present disclosure may have a degree of alignment (O.I) of 0.2 to 1.5 due to the crystal surface of the carbon-based negative electrode active material contained in the negative electrode active layer aligned at a high angle with respect to the negative electrode current collector, more specifically, 0.2 to 1.2; 0.2 to 1.0; 0.2 to 0.8; 0.2 to 0.5; 0.4 to 0.7; 0.3 to 0.6; 0.4 to 0.9; 0.5 to 0.9; 0.6 to 1.0; 0.7 to 1.0; 0.9 to 1.2; or 0.8 to 1.1.

A degree of alignment (O.I) of the carbon-based negative electrode active material of 1.5 or less means that when the carbon-based negative electrode active material includes graphite, the crystal surface, meaning the graphite layer plane, is aligned such that it has a high angle/slope with respect to the negative electrode current collector, such as an angle/slope of 60° or more, 70° or more, 70° to 90°, 80° to 90°, 65° to 85°, or 70° to 85°.

Further, the negative electrode active layer is characterized by a low spring-back rate after rolling in the orientation of the carbon-based negative electrode active material. The spring-back rate of the negative electrode active layer may refer to a rate of increase of the average thickness of the negative electrode active layer over a predetermined period of time relative to the average thickness of the negative electrode active layer immediately after rolling, and in some cases, the average density of the negative electrode active layer may be applied instead of the average thickness of the negative electrode active layer. This quantifies the degree of returning to the original state after rolling, and the lower the value, the greater the degree of improvement of the spring-back phenomenon of the negative electrode active layer.

As one example, the negative electrode active layer of the negative electrode according to the present disclosure may have an average thickness increase rate (in other words, a spring-back rate after 2.5 hours) of rolling at room temperature (22±1°C) based on the average thickness immediately after rolling of less than 4%, and more specifically, it may be 3% or less; 2% or less; or 1.5% or less.

As another example, the negative electrode active layer of the negative electrode according to the present disclosure may have an average thickness increase rate (in other words, a spring-back rate after 72 hours) of rolling at room temperature (22±1°C) based on the average thickness immediately after rolling, which may be less than 10%; more specifically, it may be less than or equal to 9.5%; or less than or equal to 9%.

**In** addition, the negative electrode according to the present disclosure is characterized by an improved spring-back phenomenon of the negative electrode active layer, which not only has excellent structural stability, but also has a high density. Specifically, the negative electrode active layer may have a density of 1.2 g/cm' to 1.8 g/cm$^3$, and more specifically, it may have a density of 1.3 g/cm' to 1.8 g/cm'; 1.4 g/cm' to 1.8 g/cm'; 1.5 g/cm' to 1.8 g/cm'; 1.4 g/cm' to 1.7 g/cm'; or 1.45 g/cm' to 1.65 g/cm'.

In this case, the negative electrode active layer is not particularly limited in thickness, but may have an average thickness of 100$\mu$m to 300$\mu$m, and more particularly may have an average thickness of 100$\mu$m to 250$\mu$m; or 130$\mu$m to 190$\mu$m. The present disclosure can uniformly align the crystal surface of the carbon-based negative electrode active material by adjusting the average thickness of the negative electrode active layer to the above range, which can improve the high-rate charge and discharge performance and energy density of the battery including the negative electrode.

Meanwhile, the negative electrode according to the present disclosure may include a predetermined silicon-based negative electrode active material along with the carbon-based negative electrode active material in the negative electrode active layer. The silicon-based negative electrode active material is a material comprising silicon (Si) as a main component, and may comprise silicon (Si) particles, silicon monoxide (SiO), silicon dioxide (SiO$_2$) particles, silicon carbide (SiC), or mixtures thereof. In some cases, the silicon (Si) containing particles may further comprise silicon carbide (SiC) particles along with silicon (Si) particles, silicon monoxide (SiO) and/or silicon dioxide (SiO$_2$) particles.

Furthermore, the silicon-based negative electrode active material may be included from 0.5 parts by weight to 30 parts by weight based on 100 parts by weight of the overall negative electrode active material, and more specifically may be included from 1 part by weight to 9 parts by weight, 3 parts by weight to 7 parts by weight, 11 parts by weight to 19 parts by weight, 13 parts by weight to 17 parts by weight, 10 parts by weight to 30 parts by weight, 20 parts by weight to 30 parts by weight, 15 parts by weight to 25 parts by weight, 9 parts by weight to 22 parts by weight. The present disclosure can improve the charge capacity per unit mass while reducing the lithium consumption and irreversible capacity loss during the initial charge and discharge of the battery by adjusting the content of the carbon-based negative electrode active material and the silicon-based negative electrode active material included in the negative electrode active material to the range as described above.

Also, the negative electrode active layer may optionally further comprise conductors, binders, other additives, and the like as needed along with the carbon-based negative electrode active material as the main component.

The conductor may include, but is not limited to, one or more of carbon black such as acetylene black, ketchen black, etc.; carbon nanotubes; carbon fibers; and the like.

As one example, the negative electrode active layer may contain carbon black, carbon nanotubes, carbon fibers, and the like as a conductor singly or in combination.

**In** this case, the content of the conductor may be 0.1 parts by weight to 10 parts by weight for the overall 100 parts by weight of the negative electrode active layer, and more specifically, it may be 0.1 parts by weight to 8 parts by weight, 0.1 parts by weight to 5 parts by weight, 0.1 parts by weight to 3 parts by weight, 2 parts by weight to 6 parts by weight, or 0.5 parts by weight to 2 parts by weight. The present disclosure can prevent, by controlling the content of the conductor to a range as described above, a problem in which the resistance of the negative electrode increases due to a low content of the conductor, resulting in a decrease in the charging capacity, and a problem in which the content of the negative electrode active material decreases due to an excess of the conductor, resulting in a decrease in the charging capacity, or a problem in which the rapid charging characteristic decreases due to an increase in the loading amount of the negative electrode active layer.

Furthermore, the binder may be suitably applied as a component that assists in the coupling of the negative electrode active material and the conductor or the like to the current collector without degrading the electrical properties of the electrode, but more particularly, the binder may comprise any one or more among vinylidene fluoride-hexafluoropropylene copolymer (PVDF-co-HFP), polyvinylidene fluoride (PVdF), polyacrylonitrile, polymethylmethacrylate, polyvinyl alcohol, carboxymethylcellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer, sulfonated ethylene-propylene-diene monomer, styrene butadiene rubber (SBR), and fluorinated rubber.

The content of the binder may be 0.1 parts by weight to 10 parts by weight for the overall 100 parts by weight of the negative electrode active layer, and more specifically, it may be 0.1 parts by weight to 8 parts by weight, 0.1 parts by weight to 5 parts by weight, 0.1 parts by weight to 3 parts by weight, or parts by weight 2 to 6 parts by weight. The present disclosure can control the content of the binder contained in the negative electrode active layer to the above range, thereby preventing the adhesion of the active layer from decreasing due to a low content of the binder or the electrical properties of the electrode from decreasing due to an excess of the binder.

In addition, the negative electrode active layer may have a structure in which two separate layers are stacked according to the battery model or product use to which the negative electrode of the present disclosure is applied but is not limited thereto.

Specifically, the negative electrode according to the present disclosure may have a structure in which a first negative electrode active layer is arranged on the negative electrode current collector, and a second negative electrode active layer is arranged on the first negative electrode active layer. In this case, the first negative electrode active layer and the second negative electrode active layer each contain a carbon-based negative electrode active material, and the carbon-based negative electrode active material contained in each layer may be the same or different. The advantage of having a two-layer structure of the negative electrode active layer on the negative electrode current collector is that the composition of each negative electrode active layer can be easily controlled, so that an energy-efficient active material of the battery can be applied as the negative electrode active material to improve the electrical performance of the negative electrode, as well as to improve and/or prevent problems arising therefrom (e.g., decreased adhesion between the surface of the negative electrode current collector and the negative electrode active layer).

Further, the negative electrode current collector is not particularly limited as long as it has a high conductivity without causing chemical changes in the battery, and for example, copper, stainless steel, nickel, titanium, calcined carbon, and the like can be used, and in the case of copper or stainless steel, a surface treated with carbon, nickel, titanium, silver, and the like can also be used. In addition, the average thickness of the negative electrode current collector above may be suitably applied from 1$\mu$m to 500$\mu$m, considering the conductivity and overall thickness of the negative electrode being manufactured.

**Lithium Secondary Battery**

The present disclosure also provides, in one aspect,
a lithium secondary battery comprising an electrode assembly including a positive electrode, a negative electrode of the present disclosure as described above, and a separator disposed between the positive electrode and negative electrode.

In this case, the negative electrode has the same configuration as that described above, and thus specific description is omitted.

Further, the positive electrode comprises a positive electrode active material layer prepared by applying, drying, and pressing a slurry including a positive electrode active material on the positive electrode collector, which may optionally further include conductors, binders, other additives, and the like as needed.

The positive electrode active material may comprise one or more of the lithium metal oxides represented by Chemical Formula 1 and Chemical Formula 2 below, which can react electrochemically on the positive electrode current collector, reversibly intercalation and deintercalation of lithium ions:

[Chemical formula 1]      $Li_x [Ni_y Co_z Mn_w M^1_v] O_2$

[Chemical formula 2]      $LiM^2_p Mn_q P_r O_4$

wherein Chemical formula 1 and 2,

$M^1$ is at least one element selected from W, Cu, Fe, V, Cr, Ti, Zr, Zn, Al, In, Ta, Y, La, Sr, Ga, Sc, Gd, Sm, Ca, Ce, Nb, Mg, B, and Mo,

x, y, z, w, and v are $1.0 \leq x \leq 1.30$, $0.5 \leq y < 1$, $0 < z \leq 0.3$, $0 < w \leq 0.3$, and $0 \leq v \leq 0.1$, respectively, wherein y+z+w+v=1,

$M^2$ is Ni, Co, or Fe; and

p is 0.05≤p≤1.0, and

q is 1-p or 2-p, and

r is 0 or 1.

The lithium metal oxide represented by chemical formula 1 and chemical formula 2 above is a material having a high content of nickel (Ni) and manganese (Mn), respectively, and when used as a positive electrode active material, it has the advantage of providing a more stable supply of high capacity and/or high voltage electricity compared to conventionally used positive electrode active materials such as lithium iron phosphate ($LiFeO_4$), etc.

In this case, the lithium metal oxide represented by the chemical formula 1 may include $LiNi_{0.8}Co_{0.1}Mn_{0.1}O_2$, $LiNi_{0.6}CO_{0.2}Mn_{0.2}O_2$, $LiNi_{0.9}CO_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O_2$, and the like, and the lithium metal oxide represented by the chemical formula 2 may include $LiNi_{0.7}Mn_{1.3}O_4$; $LiNi_{0.5}Mn_{1.5}O_4$; $LiNi_{0.3}Mn_{1.7}O_4$, $LiFePO_4$, $LiFe_{0.7}Mn_{0.3}PO_4$, and the like, which may be used singly or in combination.

Further, the positive electrode active material may be included at least 85 parts by weight of the positive electrode active material layer, and more specifically, it may be included at least 90 parts by weight, at least 93 parts by weight, or at least 95 parts by weight.

Moreover, the positive electrode active material layer may further include conductors, binders, other additives, and the like along with the positive electrode active material.

In this case, the conductor material is used to improve the electrical performance of the positive electrode, and may apply those conventionally used in the art, but may specifically include one or more of natural graphite, artificial graphite, carbon black, acetylene black, denka black, ketjen black, super-P, channel black, furnace black, lamp black, thermal black, graphene, and carbon nanotubes.

Furthermore, the conductor may comprise 0.1 parts by weight to 5 parts by weight of each positive electrode active layer, and more specifically may comprise 0.1 parts by weight to 4 parts by weight; 2 parts by weight to 4 parts by weight; 1.5 parts by weight to 5 parts by weight; 1 parts by weight to 3 parts by weight; 0.1 parts by weight to 2 parts by weight; or 0.1 parts by weight to 1 part by weight.

In addition, the binder plays a role in causing the positive electrode active material, positive electrode additive, and conductor to bond to each other, and may be used without being particularly limited if it has such function. Specifically, the binder may include one or more resins selected from polyvinylidene fluoride-hexafluoropropylene copolymer (PVdF-co-HFP), polyvinylidene fluoride (PVdF), polyacrylonitrile, polymethylmethacrylate, and copolymers thereof. In one example, the binder may comprise polyvinylidene fluoride.

In addition, the binder may comprise from 1 part by weight to 10 parts by weight of each positive electrode active layer, more particularly from 2 parts by weight to 8 parts by weight; or from 1 part by weight to 5 parts by weight.

The total thickness of the positive electrode active layers is not particularly limited, but may be from $50\mu$m to $300\mu$m, more specifically from $100\mu$m to $200\mu$m; from $80\mu$m to $150\ \mu$m; from $120\mu$m to $170\mu$m; from $150\mu$m to $300\mu$m; from $200\mu$m to $300\mu$m; or from $150\mu$m to $190\ \mu$m.

Further, as the positive electrode, a positive current collector having a high conductivity without causing chemical changes in the battery can be used. For example, stainless steel, aluminum, nickel, titanium, calcined carbon, or the like may be used, and in the case of aluminum or stainless steel, a surface treatment with carbon, nickel, titanium, silver, or the like may be used. **In** addition, the average thickness of the current collector may be suitably applied from $3\mu$m to $500\mu$m, considering the conductivity and the overall thickness of the positive electrode manufactured.

Meanwhile, the separator interposed between the positive electrode and the negative electrode of each unit cell is an insulating thin film having high ion permeability and mechanical strength and may be any polymer conventionally used in the art, but is not particularly limited thereto, and may include one or more of the polymers selected from polypropylene; polyethylene; and polyethylene-propylene copolymers having chemical resistance and hydrophobicity. The separator may have the form of a porous polymer base material such as a sheet or a nonwoven fabric included the above-described polymer, and in some cases, it may also have the form of a composite separator in which organic or inorganic particles are coated by an organic binder on the porous polymer base material. **In** addition, the separator may have an average diameter of the pores of $0.01\mu$m to $10\mu$m, and an average thickness of $5\mu$m to $300\mu$m.

Meanwhile, the lithium secondary battery according to the present disclosure may be in the form of a secondary battery that may include a stacked; zigzag; or zigzag-stacked electrode assembly, although this is not particularly limited. As one example, the lithium secondary battery according to the present disclosure may be a pouch-type secondary battery or a prismatic secondary battery.

Hereinafter, the present disclosure will be described in more detail by examples and experimental examples.

However, the following examples and experimental examples are only illustrative of the present disclosure, and the present disclosure is not limited to the following examples and experimental examples.

**Examples 1 to 4 and Comparative Examples 1 to 6. Manufacturing of negative electrode for lithium secondary battery**

First, natural graphite and artificial graphite were prepared as carbon-based negative electrode active materials, respectively, and a negative electrode slurry was prepared using the prepared carbon-based negative electrode active materials.

Specifically, a negative electrode active material was prepared by mixing natural graphite and artificial graphite in a ratio of 1 to 3:7 to 9 by weight, and carbon black as a conductor and carboxymethylcellulose (CMC) and styrene butadiene rubber (SBR) as binders. Then, a negative electrode slurry was prepared by mixing 95 parts by weight of mixed graphite, 1 part by weight of carbon black, 1.5 parts by weight of carboxymethylcellulose (CMC) and 2.5 parts by weight of styrene butadiene rubber (SBR) with water so that the solids were 50%.

Once the negative electrode slurry was prepared, the negative electrode slurry was cast using a die coater on a copper thin plate (thickness: $10\mu$m) that was transferred roll-to-roll (transfer speed: 5 m/min). At this time, the average thickness of the cast negative electrode slurry was controlled to be $200\mu$m.

Then, a permanent magnet was disposed on the upper portion of the applied negative electrode slurry and the lower portion of the negative electrode current collector, and a magnetic field was applied for 15 seconds to 30 seconds, and the negative electrode slurry was heat dried to form a negative electrode active layer (density: $1.5\pm0.05$ g/cm$^3$). At this time, the intensity of the magnetic field applied to the negative electrode slurry was adjusted as shown in Table 1 below, and X-ray diffraction spectroscopy (XRD) was performed on the negative electrode active layer to measure the spectrum. The measurement conditions for X-ray diffraction (XRD) were as follows:

- Target: Cu(K$\alpha$-ray) graphite monochromator

- Slit: Divergent slit = 1°, receiving slit = 0.1mm, scattering slit = 1°,

- Measurement area: (1,1,0) surface: $76.5° < 2\theta < 78.5°$/ (0,0,4) surface: $53.0° < 2\theta < 57.0°$.

From the spectrum measured under the above conditions, the respective areas of the peaks indicating the (0,0,4) crystal surface and the peaks indicating the (1,1,0) crystal surface were obtained, and the ratio of these areas ($I_{004}/I_{110}$) was calculated to obtain the degree of alignment (O.I) of the mixed graphite by region. The calculated values are shown in Table 1 below.

Subsequently, the negative electrode for lithium secondary battery was prepared by rolling the active layer at $22\pm1°$C with a transfer speed of 3 m/s. At this time, the rolling load of the negative electrode active layer was adjusted as shown in Table 1 below.

[Table 1]

|  | Magnetic field intensity [G] | Rolling load [ton] | O.I | Whether Formula 1 is satisfied |
|---|---|---|---|---|
| Example 1 | 3500 | 5.255 | 1.34 | O |
| Example 2 | 4000 | 5.075 | 1.04 | O |
| Example 3 | 6250 | 4.895 | 0.44 | O |
| Example 4 | 8050 | 4.750 | 0.39 | O |
| Comparative Example 1 | - | 5.000 | 6.98 | X |
| Comparative Example 2 | - | 9.000 | 8.21 | X |
| Comparative Example 3 | 3500 | 2.500 | 1.29 | X |
| Comparative Example 4 | 3500 | 7.000 | 1.63 | X |
| Comparative Example 5 | 8050 | 2.000 | 0.36 | X |
| Comparative Example 6 | 8050 | 6.500 | 0.75 | X |

**Examples 5 to 8 and Comparative Examples 7 to 12. Manufacturing lithium secondary battery**

A positive electrode was prepared by preparing LiNi$_{0.7}$Co$_{0}$.1Mn0.1Al0.1O2 having a particle size of $5\mu$m as a positive electrode active material, mixing it in N-methyl pyrrolidone (NMP) in a weight ratio of 94:3:3 with polyvinylidene fluoride as a carbon-based conductive agent and binder to form a slurry, casting it on an aluminum thin plate, drying it in a 120°C vacuum oven, and rolling it.

A separator comprising 18$\mu$m of polypropylene was interposed between the above-obtained positive electrode and the negative electrode prepared in Examples 1 to 4 and Comparative Examples 1 to 6, respectively, and the lithium secondary battery was assembled by inserting it into a case and then injecting an electrolyte composition.

At this time, the types of negative electrodes applied to each lithium secondary battery are indicated in Table 2 below.

[Table 2]

| | Type of negative electrode applied |
|---|---|
| Example 5 | Negative electrode prepared in Example 1 |
| Example 6 | Negative electrode prepared in Example 2 |
| Example 7 | Negative electrode prepared in Example 3 |
| Example 8 | Negative electrode prepared in Example 4 |
| Comparative Example 7 | Negative electrode prepared in Comparative Example 1 |
| Comparative Example 8 | Negative electrode prepared in Comparative Example 2 |
| Comparative Example 9 | Negative electrode prepared in Comparative Example 3 |
| Comparative Example 10 | Negative electrode prepared in Comparative Example 4 |
| Comparative Example 11 | Negative electrode prepared in Comparative Example 5 |
| Comparative Example 12 | Negative electrode prepared in Comparative Example 6 |

**Experimental Example.**

The following experiments were performed to evaluate the performance of the negative electrode according to the present disclosure.

A) Spring-back improvement effect of the negative electrode active layer

The negative electrode was prepared by performing the same method as in Examples 1 to 4 and Comparative Examples 1 to 6, but the average thickness and density of the negative electrode active layer were measured immediately after rolling. Then, the manufactured negative electrode was stored at room temperature (22$\pm$1°C) for 120 hours, and the average thickness of the negative electrode active layer was measured after 0.5 hours, 1 hour, 2.5 hours, 24 hours, 48 hours, and 72 hours.

From the measured results, the average thickness increase rate of the negative electrode active layer immediately after rolling was calculated and determined as the spring-back rate of the negative electrode active layer. The results are shown in Table 3 below.

b) Evaluation of lifespan characteristics

For the lithium secondary batteries prepared in Examples 5 to 8 and Comparative Examples 7 to 12 (with the negative electrodes of Examples 1 to 4 and Comparative Examples 1 to 6, respectively), the capacity (1 cycle capacity) was measured when the lithium secondary batteries were buffered (SOC 100%) with 0.5 C-rate at room temperature (22$\pm$1°C), and the buffered lithium secondary batteries were discharged to 1.5V at 0.1 C-rate. Each lithium secondary battery was then recharged to 0.5 C-rate (SOC 100%) and discharged to 1.5 V at 1.0 C-rate for 200 cycles, and the capacity of the recharged lithium secondary battery when discharged to 1.5 V at 0.1 C-rate was measured (200-cycle capacity). Based on the measured 1-cycle capacity, the discharge capacity retention rate of the capacity after 100 cycles was calculated, and the results are shown in Table 3 below.

[Table 3]

| | Spring-back rate according to storage time | | | | discharge capacity retention rate after 100 cycles |
|---|---|---|---|---|---|
| | 0.5ho urs | 1hour | 2.5hours | 72hours | |
| Example 1 | 3.18% | 2.75% | 1.48% | 9.53% | 89% |

(continued)

| | Spring-back rate according to storage time | | | | discharge capacity retention rate after 100 cycles |
|---|---|---|---|---|---|
| | 0.5ho urs | 1hour | 2.5hours | 72hours | |
| Example 2 | 3.16% | 2.72% | 1.39% | 9.21% | 94% |
| Example 3 | 3.14% | 2.64% | 1.30% | 8.66% | 92% |
| Example 4 | 3.11% | 2.51% | 1.21% | 8.12% | 90% |
| Comparative Example 1 | 3.24% | 6.67% | 4.48% | 10.36% | 79% |
| Comparative Example 2 | 3.19% | 6.11% | 4.02% | 10.12% | 72% |
| Comparative Example 3 | 3.22% | 8.44% | 7.59% | 16.98% | 81% |
| Comparative Example 4 | 3.20% | 6.62% | 4.15% | 10.09% | 73% |
| Comparative Example 5 | 3.21% | 7.51% | 6.86% | 14.37% | 83% |
| Comparative Example 6 | 3.23% | 6.87% | 4.85% | 10.15% | 76% |

As shown in Table 3 above, it can be observed that the negative electrode for lithium secondary battery according to the present disclosure has a significantly improved spring-back phenomenon of the negative electrode active layer after rolling, and the structural stability of the negative electrode active layer is improved, resulting in an increased lifespan.

Specifically, the negative electrodes according to the examples, in which the rolling load was controlled according to Formula 1 after the magnetic field application of the negative electrode slurry according to the present disclosure, showed an improved spring-back phenomenon of the negative electrode active layer, such that the spring-back rate was found to be 2% or less at 2.5 hours after rolling, and the spring-back rate was found to be less than 10% at 72 hours after rolling. In addition, the negative electrodes of the examples have improved structural stability of the negative active layer, such that the discharge capacity retention rate was found to be 89% or more even after 100 cycles of charge and discharge.

On the other hand, the negative electrodes of the comparative examples in which rolling was performed without applying magnetic field or with a load that does not satisfy Formula 1 of the present disclosure after applying magnetic field were found to have a significant increase in the thickness of the negative active layer at 1 hour after rolling. Specifically, the spring-back rate was 6% or more at 2.5 hours after rolling, and the spring-back rate was more than 10% at 72 hours after rolling. Furthermore, the negative electrodes of the comparative examples were found to have a discharge capacity retention rate of less than 85% after 100 cycles of charge and discharge due to low structural stability of the negative active layer.

From these results, it can be seen that the manufacturing method according to the present disclosure can significantly improve the spring-back phenomenon of the negative electrode active layer by drying and rolling the negative electrode slurry with an applied magnetic field, but controlling the rolling load according to Formula 1, which depends on the intensity of the magnetic field applied to the negative electrode slurry, so that the spring-back phenomenon of the negative electrode active layer can be significantly improved with a simple and fewer number of processes. In addition, the negative electrode prepared accordingly not only exhibits high energy density while maintaining the objective thickness, but also has the advantage of low rolling stress and improved structural stability of the negative active layer, which reduces the volume change of the negative active layer with charging and discharging, thereby improving the lifespan of the battery.

As above, the present disclosure has been described in more detail through the drawings and aspects. However, since the configuration described in the drawings or aspects described herein is merely one aspect of the present disclosure and do not represent the overall technical spirit of the disclosure, it should be understood that the disclosure covers various equivalents, modifications, and substitutions at the time of filing of this application.

Thus, the technical scope of the present disclosure is not limited to what is described in the detailed description of the specification but should be determined by the claims of the patent.

**Claims**

1. A manufacturing method of a negative electrode for a lithium secondary battery, comprising:

applying a magnetic field to a negative electrode slurry applied on a negative electrode current collector;
drying the negative electrode slurry to which the magnetic field was applied to form a negative electrode active layer; and
rolling the formed negative electrode active layer,

wherein the negative electrode slurry includes a carbon-based negative electrode active material,
wherein the magnetic field is applied with an intensity of from 3,000 G to 15,000 G,
wherein a rolling load in the rolling is controlled according to the following Formula 1:

[Formula 1]

$$y = Ax + B$$

wherein in Formula 1,

y represents the rolling load (unit: ton),
x indicates the magnetic field intensity (unit: Gauss) when the magnetic field is applied,
A and B satisfy $-0.01 \leq A < 0$ and $3 \leq B \leq 7$.

2. The manufacturing method of claim 1, wherein the rolling load is from 1 ton to 7 tons.

3. The manufacturing method of claim 1, wherein the rolling comprising:

a first rolling in which the formed negative electrode active layer is pressurized with the rolling load of Formula 1; and
a second rolling in which the first rolled negative electrode active layer is further pressurized,
wherein the rolling load at the first rolling is greater than the rolling load at the second rolling.

4. The manufacturing method of claim 3, wherein the rolling load at the second rolling is 50% or less of the rolling load at the first rolling.

5. The manufacturing method of claim 1, wherein the rolling is performed at a temperature of 20°C to 35°C.

6. The manufacturing method of claim 1, wherein the negative electrode active layer has an average thickness increase rate of less than 10% after 72 hours of rolling at room temperature based on the average thickness immediately after rolling.

7. The manufacturing method of claim 1, wherein applying the magnetic field is performed for 5 seconds to 60 seconds.

8. A negative electrode for lithium secondary battery manufactured by the manufacturing method according to claim 1 comprising:
a negative electrode current collector, and a negative electrode active layer provided on at least one surface of the negative electrode current collector and including a carbon-based negative electrode active material.

9. The negative electrode for lithium secondary battery of claim 8, wherein the negative electrode active layer has a degree of alignment (O.I) of the carbon-based negative electrode active material represented by Formula 2, which is from 0.2 to 1.5:

[Formula 2]

$$O.I = I_{004}/I_{110}$$

wherein Formula 2,

$I_{004}$ indicates a peak area representing the (0,0,4) crystal surface in X-ray diffraction spectroscopy measurements of the negative electrode active layer, and
$I_{110}$ indicates a peak area representing the (1,1,0) crystal surface in an X-ray diffraction spectroscopy measurement of the negative electrode active layer.

10. The negative electrode for lithium secondary battery of claim 8, wherein the negative electrode active layer has a spring-back rate of less than 10%.

11. The negative electrode for lithium secondary battery of claim 8, wherein the negative electrode active layer has an average thickness of $100\mu$m to $300\mu$m.

12. The negative electrode for lithium secondary battery of claim 8, wherein the negative electrode active layer has a density of 1.2 g/cm$^3$ to 1.8 g/cm$^3$.

13. The negative electrode for lithium secondary battery of claim 8, wherein the carbon-based negative electrode active material included in the negative electrode active layer includes at least one of natural graphite or artificial graphite.

14. The negative electrode for lithium secondary battery of claim 8, wherein the negative electrode active layer further comprises a silicon-based negative electrode active material,
wherein the silicon-based negative electrode active material includes at least one of Si, SiC, or SiOx (wherein $0.8 \leq x \leq 2.5$).

【FIG. 1】

【FIG. 2】

y=-0.0001x + 5.5426

Magnetic field intensity [gauss]

Rolling road [ton]

| INTERNATIONAL SEARCH REPORT | International application No. |
|---|---|
| | **PCT/KR2024/003084** |

**A. CLASSIFICATION OF SUBJECT MATTER**

**H01M 4/1393**(2010.01)i; **H01M 4/04**(2006.01)i; **H01M 4/133**(2010.01)i; **H01M 4/587**(2010.01)i; **H01M 4/38**(2006.01)i; **H01M 4/48**(2010.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/1393(2010.01); C01B 32/20(2017.01); H01M 10/0525(2010.01); H01M 4/133(2010.01); H01M 50/20(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 음극 슬러리(anode slurry), 자기장 (magnetic field), 탄소계 음극 활물질(carbon-based anode active material)

**C. DOCUMENTS CONSIDERED TO BE RELEVANT**

| Category* | Citation of document, with indication, where appropriate, of the relevant passages | Relevant to claim No. |
|---|---|---|
| X | KR 10-2018-0047846 A (SAMSUNG SDI CO., LTD.) 10 May 2018 (2018-05-10)<br>See paragraphs [0041], [0052]-[0053] and [0098]-[0099]; and claim 1. | 1,7-8,13-14 |
| A | | 2-6,9-12 |
| A | KR 10-2017-0040766 A (LG CHEM, LTD.) 13 April 2017 (2017-04-13)<br>See entire document. | 1-14 |
| A | KR 10-2022-0044175 A (SK ON CO., LTD.) 06 April 2022 (2022-04-06)<br>See entire document. | 1-14 |
| A | KR 10-2239295 B1 (KOREA INSTITUTE OF MACHINERY & MATERIALS) 12 April 2021 (2021-04-12)<br>See entire document. | 1-14 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 June 2024** | **24 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/003084**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2021-0130062 A (SK INNOVATION CO., LTD.) 29 October 2021 (2021-10-29)<br>See entire document. | 1-14 |

Form PCT/ISA/210 (second sheet) (July 2022)

<table>
<tr><td colspan="2" align="center"><strong>INTERNATIONAL SEARCH REPORT</strong><br>Information on patent family members</td><td colspan="2">International application No.<br><strong>PCT/KR2024/003084</strong></td></tr>
</table>

| Patent document cited in search report | | Publication date (day/month/year) | Patent family member(s) | | | Publication date (day/month/year) |
|---|---|---|---|---|---|---|
| KR 10-2018-0047846 | A | 10 May 2018 | CN | 108023064 | A | 11 May 2018 |
| | | | CN | 108023064 | B | 08 October 2021 |
| | | | EP | 3316378 | A1 | 02 May 2018 |
| | | | KR | 10-2484406 | B1 | 02 January 2023 |
| | | | US | 10629892 | B2 | 21 April 2020 |
| | | | US | 2018-0123120 | A1 | 03 May 2018 |
| KR 10-2017-0040766 | A | 13 April 2017 | KR | 10-2246628 | B1 | 03 May 2021 |
| KR 10-2022-0044175 | A | 06 April 2022 | KR | 10-2021-0130062 | A | 29 October 2021 |
| | | | KR | 10-2436898 | B1 | 25 August 2022 |
| | | | KR | 10-2672237 | B1 | 03 June 2024 |
| KR 10-2239295 | B1 | 12 April 2021 | US | 2023-0129924 | A1 | 27 April 2023 |
| | | | WO | 2021-261674 | A1 | 30 December 2021 |
| KR 10-2021-0130062 | A | 29 October 2021 | KR | 10-2022-0044175 | A | 06 April 2022 |
| | | | KR | 10-2436898 | B1 | 25 August 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230032292